# EUROPEAN PATENT APPLICATION

(11) **EP 0 816 284 A1**
(43) Date of publication of application: **07.01.1998**
(21) Application number: 96119972.6
(22) Date of filing: 12.12.1996
(51) Int. Cl.: B67D 5/20, B60K 15/04, G01F 25/00

(54) **Device for checking the quantity of gasolines, diesel fuels, fuels or liquids in general, during their introduction in tanks or containers in general**

(30) Priority: 27.06.1996 IT MI961319
(71) Applicant: Hoga Italia S.p.A., 20124 Milano (IT)
(72) Inventor: Galimberti, Sergio, 20124 Milano (IT); Galimberti, Roberto, 20090 Segrate (Prov. of Milano) (IT); Pregnolato, Aldo, 20133 Milano (IT)
(74) Representative: Modiano, Guido, Dr.-Ing.

(57) **Abstract**

A device for checking the quantity of gasolines, Diesel fuels, fuels or liquids in general during their introduction in tanks or containers in general, the device comprising a body (2a,2b) that is crossed by a duct (3a,3b) for the passage of the liquid that supplies the tank. The flow detector (4a,4b) of a flow meter is arranged along the duct (3a,3b) and the meter is connected to means (5a,5b) for displaying the quantity of liquid that has flowed through the duct (3a,3b). The device can be of the movable type, to be connected to the inlet of the tank or of the duct (3a,3b) that feeds the tank, or of the fixed type, to be installed along the tank filler duct, for example of vehicles.

## Description

The present invention relates to a device for checking the quantity of gasolines, Diesel fuels, fuels or liquids in general during their introduction in tanks or containers in general.

Gasolines, Diesel fuels, or fuels in general are conventionally sold by means of adapted pumps, which have flow meters that display the delivered quantity of fuel and at the same time calculate the corresponding selling price.

The purchaser is usually unable to check the exactness of the fuel quantity measurement performed by the pump and therefore cannot detect any errors in calculation arising from an incorrect calibration of the measurement instrument of the delivery pump.

A principal aim of the present invention is to solve the above described problem by providing a device that allows the purchaser to check the quantity of gasolines, Diesel fuels, fuels or liquids in general during their introduction in tanks.

Within the scope of this aim, an object of the invention is to provide a device that can be applied or installed very simply and easily both in tanks and at the inlet of the filler duct of the tank with which vehicles are usually equipped.

Another object of the invention is to provide a device that is simple and easy to use and is highly reliable in operation.

Another object of the invention is to provide a device that offers the greatest assurances of safety during use.

This aim, these objects, and others that will become apparent hereinafter are achieved by a device for checking the quantity of gasolines, Diesel fuels, fuels or liquids in general during their introduction in tanks or containers in general, characterized in that it comprises a body that is crossed by a duct for the passage of the liquid that supplies the tank, a flow detector of a flow meter being arranged along said duct, said meter being connected to means for displaying the quantity of liquid that has flowed through said duct.

Further characteristics and advantages of the invention will become apparent from the following detailed description of some preferred but not exclusive embodiments of the device according to the invention, illustrated only by way of non-limitative example in the accompanying drawings, wherein:
figure 1 is a schematic axial sectional view of the device according to the invention in a first embodiment;
figure 2 is a view of the device of figure 1, taken from one end;
figure 3 is a sectional view of figure 2, taken along the plane III-III;
figure 4 is a schematic view of the device according to the invention in a second embodiment;
figure 5 is a schematic axial sectional view of the device according to the invention in a third embodiment;
figure 6 is a sectional view of figure 5, taken along the plane VI-VI.

With reference to the above figures, the device according to the invention, generally designated by the reference numerals 1a and 1b in its first two embodiments, comprises a body 2a, 2b that is crossed by a duct 3a and 3b for the passage of the liquid that supplies the tank or container in general. The flow detector 4a, 4b of a flow meter is arranged along the duct 3a, 3b; said meter is connected to means 5a, 5b for displaying the quantity of liquid that has flowed through the duct 3a, 3b.

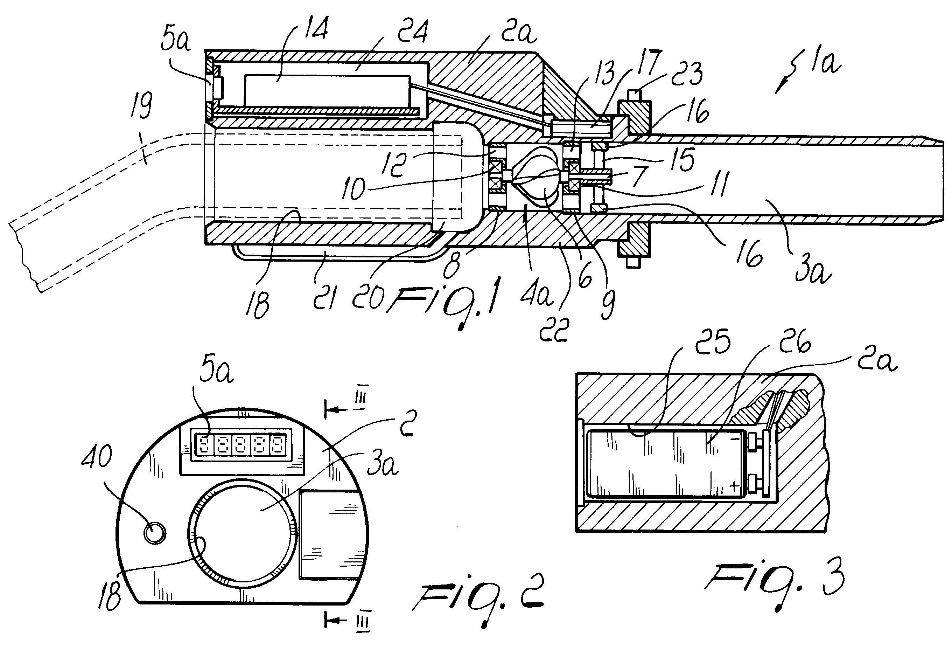

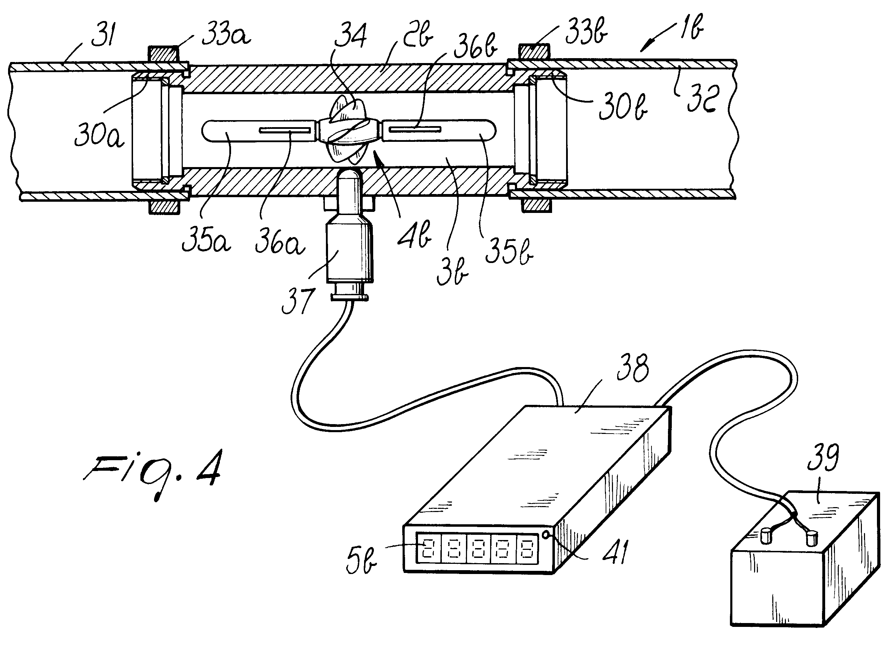

More particularly, the device according to the invention, in a first embodiment shown in figures 1 to 3, comprises a body 2a that is substantially funnel-shaped and is axially crossed by the duct 3a.

The flow detector 4a is constituted by a rotor 6 keyed on a shaft 7 that is supported, so as to be rotatable about its own axis, by two supporting rings 8 and 9 by means of bearings 10 and 11.

The supporting rings 8 and 9 are provided with appropriate perforations 12 and 13 to allow the liquid to flow along the duct 3a.

The rotor 6 is connected, by means of a transducer that converts the rotary motion of the rotor into electrical pulses, to a processing unit 14 adapted to process the received electrical pulses and display, on the display means 5a, the corresponding quantity of liquid that has flowed through the duct 3a.

More particularly, the transducer can be constituted by a disk-like element 15, which is also appropriately perforated to avoid interrupting the flow of the liquid along the duct 3a and is peripherally provided with small magnets 16 at its side directed towards the walls that delimit the duct 3a.

A magnetic field variation detector 17 or another technically equivalent element is arranged at the region where the magnets 16 are located and transmits electrical pulses to the processing unit 14 as a consequence of the variation in the magnetic field caused by the rotation of the magnets 16.

The processing unit 14 can be constituted by an electronic microprocessor that processes the electrical pulses received from the transducer and drives the display means 5a, which are preferably constituted by a LED or liquid-crystal display.

The inlet of the duct 3a is conveniently provided with a seat 18 for the spout of a nozzle 19 of the type normally used in fuel pumps.

The bottom of the seat 18 is conveniently provided with vents 20 to prevent the liquid delivered by the nozzle 19 from gushing back.

A transparent column 21, connected to the duct 3a so as to retain part of the liquid that flows along the duct 3a, can be conveniently provided on the body 2a.

The column 21 allows the user to check the quality of the fuel and particularly to see whether the delivered fuel is free of impurities and foreign matter.

It is possible to provide a window 22 of transparent material along the extension of the duct 3a, particularly proximate to the rotor 6, to allow the user to visually check the flow of the delivered liquid.

The body 2a can have, on its outer surface, engagement means, such as for example fins or a threaded portion 23, by means of which the body 2a can be detachably associated with the inlet of the filler tube of a tank or directly with the inlet of the tank or of any container.

The microprocessor 14 is arranged inside a compartment 24 formed in the body 2a; likewise, a compartment 25 is formed inside the body 2a and is hermetically separated from the duct 3a; batteries or accumulators 26 can be accommodated in said compartment 25 to supply the microprocessor 14, the display 5a, and the transducer of the flow meter.

The device in a first embodiment is of the movable type, in that it can be fitted, when required, on the inlet of the filler duct of motor vehicle tanks and directly at the inlet of a tank or container in general used for filling.

In a second embodiment, shown in figure 4, the device according to the invention is meant to be arranged along the extension of the filler duct of a tank in a fixed manner.

More particularly, the body 2b is provided as a tubular segment that is axially crossed by the duct 3b.

The body 2b has, at its axial ends, regions 30a and 30b that are meant for hermetic connection to two portions 31 and 32 of the filler tube of the tank. The connection can be performed by fitting the ends of the filler tube segments 31 and 32 on the end regions 30a and 30b of the body 2b and securing them, in a per se known manner, for example by means of hose clamps 33a and 33b.

In this second embodiment, the flow detector is constituted by a rotor 34 that is supported, so as to be rotatable about its own axis, which coincides substantially with the axis of the duct 3b, by two opposite shafts 35a and 35b that are supported, for example by means of fins 36a and 36b, by the internal walls of the duct 3b.

The rotor 34 can be constituted by a polarized rotor, and a magnetic field variation detector 37 is arranged laterally to the rotor 34; the detector 37 is connected, by means of a conventional transducer, that is not shown for the sake of simplicity, to a processing unit constituted by an electronic microprocessor 38.

The microprocessor 38 is connected to the display means 5b, which can be constituted, as already mentioned with reference to the first embodiment, by a LED or liquid-crystal display.

In this second embodiment, the microprocessor 38 and the display are arranged outside the body 2b and can be arranged proximate to the dashboard of the vehicle or in another adapted location.

The microprocessor 38 and the transducer of the flow meter can be supplied with electric power by connecting them to the battery 39 of the vehicle.

The microprocessor 38 or 14 can be provided with a memory for calculating the total quantity measured by the flow meter, so as to report, for example by means of a LED that emits visible light, on the display 5a or 5b, the need for periodic maintenance interventions to ensure maximum reliability of the device.

Both in the first and in the second embodiments, the device can be activated by means of a button 40, 41 and its use may optionally be controlled by the deactivation of a key-operated safety device or the like.

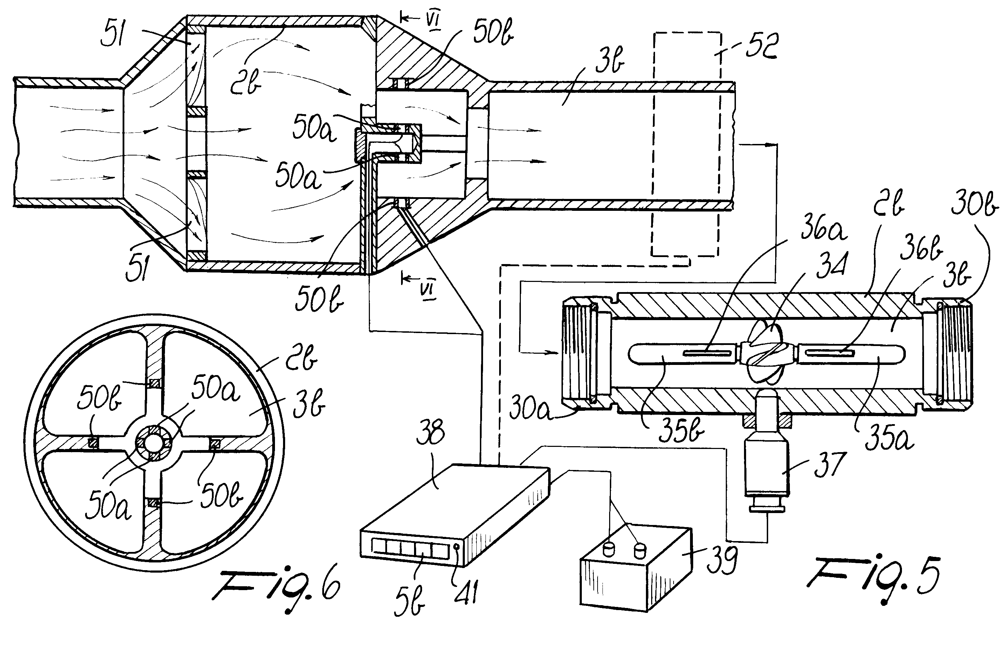

Advantageously, as shown in particular in figures 5 and 6, it is also possible to arrange, along the duct 3a or 3b, means for detecting the quality of the liquid conveyed through the duct 3a or 3b.

The quality detection means are operatively connected to a control device, which can be constituted by the processing unit 14 or 38 itself or by another processing unit and is adapted to compare the detection of the quality detection means with a reference value that is preset in the control device.

The quality detection means are conveniently constituted by means for detecting the electrical conductivity of the liquid that flows through the duct 3a or 3b. A reference conductivity value is preset in the control device and corresponds to the conductivity of a sample of liquid that is satisfactory as regards its quality.

The electrical conductivity detection means comprise at least one pair of electrodes; in the illustrated case there are four pairs of electrodes, designated by the reference numerals 50a and 50b.

Each pair of electrodes is arranged along a branch of an electric circuit powered with low-voltage current. At the ends of said branch there are provided means for measuring the voltage drop along the branch of the electric circuit and the voltage drop is transmitted to the processing unit 14 or 38, or to another control device, which compares this voltage drop to a preset reference voltage drop corresponding to the voltage drop measured with a reference liquid.

More particularly, as shown in particular in figures 5 and 6, the various pairs of electrodes are arranged so that an electrode 50a is arranged proximate to the axis of the duct 3a or 3b, whilst the other electrodes are radially spaced with respect to the axis of the duct 3a or 3b.

The configuration of the electrodes 50a and 50b can obviously be different according to requirements.

Conveniently, ahead of the region occupied by the electrodes 50a and 50b there is provided a flow redirection device 51, constituted for example by vanes which have the function of evening out the flow of the liquid through the duct 3a or 3b at the measurement region occupied by the electrodes 50a and 50b.

The control device, which as mentioned can be constituted by the processing unit 14 or 38 itself, is furthermore operatively connected to a shutter 32, for example a guillotine-type shutter element or another type of shutter, which is arranged along the duct 3a or 3b and is actuated to close the duct 3a or 3b when the difference between the conductivity detected at the electrodes 50a and 50b is different, or outside a preset tolerance range, with respect to the conductivity that is preset in the control device.

The control device can also be connected to a display which can be constituted by the display 5a or 5b itself, in order to display an indication that corresponds to the outcome of the comparison performed, i.e., in order to indicate whether the quality of the fed liquid corresponds to the required quality or is different.

Although the quality detection means in figures 5 and 6 have been illustrated in combination with the body and with the flow meter shown in figure 4, whose same reference numerals have been kept, they may nonetheless be associated, as described earlier, with a body and a flow meter of the type shown in figures 1 to 3.

Operation of the device according to the invention is as follows.

During filling with fuel or liquids in general, by using the device according to the invention fitted on the inlet of the filler tube of the tank, in the first embodiment, or simply by activating the fixed device of the second embodiment, the flow of delivered liquid through the duct 3a, 3b causes the rotation of the rotor 6, 34. The rotation of the rotor 6, 34 is converted into electrical pulses that are processed by the microprocessor 14, 38, which displays, on the display 5a, 5b, the quantity of liquid that has flowed through the duct 3a, 3b, allowing the user to immediately check the purchased quantity of liquid.

After a preset number of operating cycles, the device reports the need to replace it or perform maintenance thereon.

If the device is equipped with means for detecting the quality of the fed liquid, of the kind shown in figures 5 and 6 and if the performed conductivity measurement is different or in any case not within a preset tolerance range with respect to the reference conductivity that corresponds to a correct composition of the fed liquid, meaning that the fed liquid has composition characteristics that do not correspond to the required ones, the processing unit 14 or 38 acts on the shutter element 52, which promptly closes the duct 3a or 3b, making it impossible to introduce more liquid.

The open and closed condition of the shutter element 52 can be indicated by the lighting of LEDs arranged on the display 5a, 5b.

In practice it has been observed that the device according to the invention fully achieves the intended aim, since it allows the user to immediately check the purchased quantity of gasolines, Diesel fuels, fuels or liquids in general.

The device thus conceived is susceptible of numerous modifications and variations, all of which are within the scope of the inventive concept; all the details may furthermore be replaced with other technically equivalent elements.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for checking the quantity of gasolines, Diesel fuels, fuels or liquids in general during their introduction in tanks or containers in general, characterized in that it comprises a body that is crossed by a duct for the passage of the liquid that supplies the tank, a flow detector of a flow meter being arranged along said duct, said meter being connected to means for displaying the quantity of liquid that has flowed through said duct.

2. A device according to claim 1, characterized in that said flow detector comprises a rotor that is supported coaxially along a portion of said duct and is rotatable about its own axis through the action of the flow of said liquid through said duct.

3. A device according to claim 2, characterized in that said rotor is connected, by means of a transducer that converts the rpm rate of said rotor into electrical pulses, to a processing unit adapted to process the received electrical pulses and to display, on said display means, the corresponding quantity of liquid that has flowed through said duct.

4. A device according to claim 3, characterized in that said processing unit is constituted by an electronic microprocessor.

5. A device according to claim 1, characterized in that said display means are constituted by a LED or liquid-crystal display.

6. A device according to claim 1, characterized in that said body is funnel-shaped and is provided with engagement means for the inlet of the tank or of the tank filler duct.

7. A device according to claim 6, characterized in that said funnel-shaped body has, on its outer side, a transparent column connected to said duct and adapted to internally retain part of the liquid that flows through said duct.

8. A device according to claim 6, characterized in that said funnel-shaped body has at least one portion made of transparent material in order to allow viewing of the flow of liquid through said duct.

9. A device according to claim 6, characterized in that the inlet of said funnel-shaped body forms a seat that can be engaged by the end of a nozzle and is provided with vents for preventing gushing back.

10. A device according to claim 6, characterized in that said funnel-shaped body has a compartment that is hermetically separated from said duct and is meant to accommodate bacteries or accumulators for the electric power supply of said processing unit.

11. A device according to claim 3, characterized in that said transducer, said processing unit, and said display means are arranged in said funnel-shaped body.

12. A device according to claim 1, characterized in that said body is shaped like a tubular segment having, at its axial ends, hermetic engagement means that can be coupled to the two portions of a filler tube of a tank.

13. A device according to claim 3, characterized in that said processing unit and said display means are arranged outside said body.

14. A device according to claim 4, characterized in that said microprocessor is provided with means for storing the value of the total quantity of measured liquid.

15. A device according to claim 1, characterized in that means for detecting the quality of said liquid are arranged along said duct, said quality detection means being operatively connected to a control device which is adapted to compare the detection of said quality detection means with a reference value preset in said control device.

16. A device according to claim 15, characterized in that said quality detection means comprise means for detecting the electrical conductivity of said liquid, a reference conductivity value being preset in said control device.

17. A device according to claim 16, characterized in that said electrical conductivity detection means comprise at least one pair of electrodes arranged in a measurement region along said duct, said pair of electrodes being arranged along a branch of an electric circuit which is supplied with low-voltage current, means being provided for measuring the voltage drop along said branch of the electrical circuit, said means being connected to said control device.

18. A device according to one or more of the preceding claims, characterized in that said control device is constituted by said processing unit.

19. A device according to one or more of the preceding claims, characterized in that it comprises a shutter element which is arranged along said duct, is operatively connected to said control device which drives said shutter element to close said duct when the measurement performed by said quality detection means is different, or outside a preset tolerance range, with respect to the reference value preset in said control device.
